# EUROPÄISCHE PATENTSCHRIFT

(11) **EP 1 189 671 B1**
(45) Veröffentlichungstag und Bekanntmachung des Hinweises auf die Patenterteilung: **03.01.2007**
(21) Anmeldenummer: 01923618.1
(22) Anmeldetag: 02.03.2001
(51) Int. Cl.: B01D 29/15, B01D 29/52, B01D 29/70

(54) **ANSCHWEMMFILTER**
ELUTRIATION FILTER
FILTRE A COUCHES

(30) Priorität: 04.03.2000 DE 10010778
(43) Veröffentlichungstag der Anmeldung: 27.03.2002
(73) Patentinhaber: Boll & Kirch Filterbau GmbH, 50170 Kerpen (DE)
(72) Erfinder: TROTZKI, Birgit, 50679 Köln (DE); KANDIAH, Sivagnanam, 50259 Pulheim (DE); LENNARTZ, Rüdiger, 50259 Pulheim (DE); SCHMITZ, Stefan, 50354 Hürth (DE)
(74) Vertreter: Althaus, Arndt
(86) Internationale Anmeldenummer: PCT/EP2001/002354
(87) Internationale Veröffentlichungsnummer: WO 2001/066222

(56) Entgegenhaltungen:
- EP-A- 0 321 104
- DE-A- 2 828 976
- DE-A- 4 101 168
- US-A- 2 731 107
- US-A- 3 262 568
- US-A- 4 804 481

## Beschreibung

Die Erfindung betrifft einen Anschwemmfilter für die Filtrierung von strömenden Medien, insbesondere Schmier- und Kühlschmiermitteln, nach dem Oberbegriff von Anspruch 1.

Aus der DE-PS 28 28 976 ist ein Anschwemmfilter bekannt, der eine im Filtergehäuse angeordnete und das Filtergehäuse in eine untere Trübekammer und eine obere Filtratkammer trennende Trennplatte aufweist, an der Filterkerzen, die einen die Kammern miteinander verbindenen Steigkanal umschließen, zum Auffangen von Feststoffen aus dem Medium angeschlossen sind. Bei diesem Anschwemmfilter wird der an den Filterkerzen abgelagerte, aus den herausgefilterten Feststoffen und Verunreinigungen bestehende Filterkuchen durch Druckgaseinleitung z.B. auf eine Restfeuchte von 50% getrocknet und anschließend mit einer speziell hierfür vorgesehenen Einrichtung gelöst. Die Einrichtung zum Lösen des Filterkuchens besteht hierbei aus einer Klopfvorrichtung, die am Kopf des Filtergehäuses angeordnet ist und die einen Stößel aufweist, der durch eine Gehäusedurchführung des Filtergehäuses abgedichtet hindurchgeführt und mit der Trennplatte gekoppelt ist. Um ein Lösen des getrockneten Filterkuchens von den Filterkerzen zu erreichen, muß mit kräftigen Schlagimpulsen der Klopfvorrichtung gearbeitet werden, die zu starken Geräuschbelästigungen und zu Schwingungen und Stoßbeanspruchungen im Anschwemmfilter führen. Um eine Übertragung der Stoß- und Schlagimpulse in die Anlagenteile, an der die Anschwemmfilter montiert sind, zu vermeiden, müssen die gattungsgemäßen Anschwemmfilter auf elastische Schwingungsdämpfer gesetzt werden.

Ein gattungsgemäßer Anschwemmfilter mit Filterkerzen, deren Steigrohre axialbeweglich an einer Trennplatte gelagert sind, ist aus der DE 41 01 168 A1 bekannt. Die Trennplatte ist hierbei starr im Filtergehäuse befestigt und die simultane Abreinigung sämtlicher Filterkerzen erfolgt mittels einer Klopfeinrichtung, die eine Schlagplatte umfasst, die mit hoher Geschwindigkeit gegen die freien Enden sämtlicher Steigrohre bewegt wird, um den Filterkuchen zu lösen. Sämtlichen Filterkerzen ist jeweils eine Druckfeder zugeordnet, die in der Filtratkammer zwischen den Köpfen der Steigrohre und der Zwischenplatte angeordnet ist, um die Belastungen der Dichtkörper, mit denen die Filterkerzen in der Schmutzkammer abdichtend an der Zwischenplatte anliegen, zu reduzieren.

Eine Abreinigung einzelner Filterkerzen oder einer Teilgruppe sämtlicher Filterkerzen ist beim gattungsgemäßen Stand der Technik nicht möglich, da die mit der Schlagplatte erzeugte Reinigungsbewegung simultan sämtliche Filterkerzen reinigt. Die simultane Beaufschlagung aller Filterkerzen mit einer Schlagplatte führt weiterhin zu starken Vibrationen und erfordert einen relativ hohen Energiebedarf zur Erzeugung der Schlagbewegung.

Aufgabe der Erfindung ist es vor allem, einen Anschwemmfilter zu schaffen, der beim Lösen des Filterkuchens besonders geräusch-und vibrationsarm arbeitet.

Diese Aufgabe wird durch die in Anspruch 1 angegebene Erfindung gelöst. Erfindungsgemäß ist vorgesehen, daß die Einrichtung zum Lösen des Filterkuchens einen Rotationskörper aufweist, mit dem die Filterkerzen einzeln oder gruppenweise mit einem Impuls beaufschlagbar sind. Bei der erfindungsgemäßen Lösung bewirkt eine Rotation des Rotationskörpers eine Axialbewegung der Steigrohre zum Erzeugen des Impuls. Die erfindungsgemäßen Maßnahmen führen zu einer erheblichen Geräusch- und Vibrationsminderung, da mit dem mittels der Einrichtung erzeugten Impuls nicht mehr die Trennplatte als Ganzes bzw. sämtliche Filterkerzen, sondern nur einzelne der Filterkerzen, also deutlich geringere Massen, beaufschlagt werden.

Bei einer bevorzugten Ausgestaltung weist der Rotationskörper zur Erzeugung des Reinigungsimpulses wenigstens einen stufenförmigen Absatz auf. Aufgrund des stufenförmigen Absatzes werden jeweils diejenigen Filterkerzen, die bei einer Rotation des Rotationskörpers die Absatzkante passiert haben, beschleunigt. Anschließend schlagen die Filterkerzen an die Trennplatte oder den Rotationskörper an, so daß einerseits durch die Beschleunigung, andererseits durch das Auftreten bzw. Aufschlagen ein ausreichender Impuls zum Lösen des Filterkuchens erzeugt wird. Bevorzugt wird allerdings, daß die Filterkerzen bei der Rückbewegung nicht gegen den Rotationskörper anschlagen, so daß der Rotationskörper keiner speziellen Lagerung oder Dämpfung bedarf. Für einen einfachen Aufbau des Anschwemmfilters sollte der Rotationskörper in der Filtratkammer angeordnet sein.

Vorzugsweise ist vorgesehen, daß die Filterkerzen konzentrisch um eine Mittelachse angeordnet sind, wobei der Rotationskörper für jeden konzentrischen Filterring eine gemeinsame oder separate kreisförmige Gleitbahn mit stufenförmigem Absatz aufweisen kann. Durch die Anordnung mehrerer Filterkerzen kann die Filterleistung des Anschwemmfilters gesteigert werden. Bei einer Ausführungsform kann vorgesehen sein, daß die Gleitbahnen wendelförmig ausgebildet sind. Durch die wendelförmige Gestaltung der Gleitbahn wird die Lage der Filterkerzen kontinuierlich verändert, bis die Absatzkante des Rotationskörpers über die Filterkerze hinwegstreicht, so daß der Beschleunigungsimpuls in die Filterkerze eingeleitet wird. Bei einer kontinuierlich über den Umfang ansteigenden Gleitbahn werden die Filterkerzen pro Umdrehung des Rotationskörpers einmal gereinigt.

Bei einer alternativen Ausführungsform des Anschwemmkörpers weist der Rotationskörper mehrere Absätze auf, wobei hierbei vorzugsweise auf Kreisbahnen mit größerem Radius mehr Absätze als auf Kreisbahnen mit kleinerem Radius angeordnet sein können. Bei dieser Ausführungsform kann auf den Kreisbahnen mit größerem Radius mit einer höheren Filterkerzendichte gearbeitet werden, wobei diese Filterkerzen bei einer Drehung des Rotationskörpers ggf. mehrfach gereinigt werden.

Der Rotationskörper kann eine Scheibe sein, und der eine oder die mehreren Absätze in den an einer der Scheibenflachseiten ausgebildeten Gleitbahnen bilden einen Versatz zwischen Gleitbahnende und einem Gleitbahnanfang. Vorzugsweise kann die Scheibe hierbei segmentförmige Öffnungen in der Scheibenflachseite aufweisen, so daß ein Teil des Filtrats durch die Scheibe hindurchtreten und über ggf. einen oberhalb des Rotationskörpers angeordneten Auslaß austreten kann. Letzteres kann alternativ auch dadurch erreicht werden, daß mehrere wendelförmige, über Radialstege verbundene Ringe den Rotationskörper bilden. In einem derart ausgebildeten Rotationskörper sind baubedingt bereits Aussparungen vorhanden, so daß das Filtrat durch den Rotationskörper durchtreten kann.

Ein einfacher Aufbau des Anschwemmfilters und der Filterkerzen ergibt sich, wenn der Steigkanal in einem oberen Kopfstück endet, das axial beweglich an der Trennplatte gelagert ist und mittels der Gleitbahnen in Axialrichtung bewegbar ist. Der Rotationskörper gleitet dann mit seinen Gleitbahnen an den Kopfstükken und gegen diese drückend entlang, bis die Kopfstücke den stufenförmigen Absatz erreichen. Die Steigkanäle und damit die Filterkerzen werden bei der Rotation der Gleitbahn kontinuierlich von der Trennplatte weggeschoben und vorzugsweise in den Trüberaum hineingeschoben. Diese ggf. gleichmäßige Verschiebebewegung wird schlagartig umgekehrt, wenn der stufenförmige Absatz an den Kopfstücken vorbeigeglitten ist. Für die Kraftaufbringung zu Rückbewegung der Filterkerzen ist vorzugsweise vorgesehen, daß zwischen Kopfstück bzw. Kopfendstück und Trennplatte ein Energiespeicher wie z.B. eine Feder vorgesehen ist, wobei der Kraftspeicher durch die Axialbewegung der Kopfstücke der Steigkanäle aufgeladen wird.

Bei einer besonders bevorzugten Ausführungsform ist das Kopfstück in der Trennplatte mittels einer Hülse gelagert, die mit einem Hülsenfortsatz über die Trennplattenunterseite hinausragt. Durch den Hülsenfortsatz wird eine vergleichsweise lange Führung der Stegrohre bzw. Kopfstücke in der Trennplatte erzielt, so daß die Axialführung der Filterkerzen in der Trennplatte selbst nach zahlreichen Betriebsstunden nicht ausgeschlagen wird. Ferner ist von Vorteil, daß die Filterkerzen nicht unmittelbar gegen die Trennplatte schlagen, sondern gegen die Stirnendflächen der Hülsen. Zur Reduzierung der Reibkräfte zwischen Rotationskörper und Kopfstück bzw. Kopfendstück können deren mit den Gleitbahnen der Rotationskörper zusammenwirkenden Stirnenden gekrümmt, vorzugsweise halbkugelförmig ausgebildet sein.

Um die beim Zurückkehren der Filterkerzen in ihre Ausgangslage erzeugten Schwingungen und Geräusche weiter zu reduzieren, kann außerdem zwischen Filterkerze und Trennplatte ein vorzugsweise ring- oder hohlkegelstumpfförmiger Dämpfungskörper angeordnet sein, der zumindest die Geräuscherzeugung bei stoßartigem Anschlagen der Filterkerzen gegen die Trennplatte dämpfen kann. Weiterhin kann die Trennplatte in der Gehäusewandung gelagert oder mit einem an dieser befestigten Flanschring verschraubt sein, wobei dann zwischen Trennplatte und Gehäusewandung bzw. Flanschring Dämpfungsmaterialien angeordnet sind. Durch diese Maßnahme wird bei vergleichweise einfachem Filteraufbau und einfachem Filteraustausch die Geräuschentwicklung weiter reduziert.

Aufgrund der zum Freisetzen der kinetischen, in den Federn gespeicherten Energie erfindungsgemäß vorgesehenen Absätze ist nur eine Drehrichtung für die Rotationskörper zulässig. Zweckmäßig kann die Einrichtung daher einen Freilauf wie einen Hülsenfreilauf oder einen Sperrklinkenfreilauf für den Rotationskörper aufweisen, der eine Fehlfunktion bzw. falsche Drehrichtung der Rotationskörper auch nach deren Wechsel ausschließt.

Zur Erzielung großer Filterflächen können eine Vielzahl von Filterkerzen in einem Filtergehäuse angeordnet werden. Bei diesen Ausgestaltungen empfiehlt es sich, daß der Abreinigungsmechanimus zum Lösen der Feststoffe mehrere Rotationskörper umfaßt, die vorzugsweise mittels eines einzigen gemeinsamen Antriebs antreibbar sind. Zur Vermeidung hoher Drehzahlen und/oder antriebs- und strömungsungünstiger Drehgeschwindigkeiten der Rotationskörper kann bei Anschwemmfiltern mit besonders großer Gesamtfilterfläche ein modularer Aufbau vorteilhaft sein, wobei in einem Filtergehäuse mehrere konzentrisch um eine Feldachse angeordnete Filterkerzen ein Filterkerzenfeld bilden und jedem Filterkerzenfeld ein auf der Feldachse mittels Wellenstümpfen am Gehäusedeckel gelagerter Rotationskörper zugeordnet ist. Die Wellen der Rotationskörper können dann auf einfache und kostengünstige Weise über Zugmittel wie Zahnriemen oder Keilriemen oder über Zahnräder mit der insbesondere zentral angeordneten Antriebswelle gekoppelt werden, um im Betrieb mit untereinander gleichen Drehzahlen umzulaufen.

In alternativer Ausgestaltung können die Filterkerzen konzentrisch um eine Mittelachse angeordnet sein und die Einrichtung umfaßt zwei mittels eines Getriebes, vorzugsweise eines Zugmittelgetriebes, mit unterschiedlichen Drehzahlen rotierende Rotationskörper. Besonders günstig ist dann, die Drehzahlübersetzung des Getriebes derart zu wählen, daß die Rotationskörper gleiche Umfangsgeschwindigkeiten aufweisen, so daß ungünstige Querströmungen oder Wirbel in der Filtratkammer vermieden werden. Hierbei empfiehlt es sich, den einen Rotationskörper drehfest mit der Antriebswelle zu verbinden und den zweiten Rotationskörper drehbar an der Antriebswelle zu lagern.

Um trotz der hohen Reibungskräfte zwischen Gleitbahn und Kopfendstück die Betriebs- und Wartungskosten des Anschwemmfilters zu reduzieren, können die hütchenförmigen, an den Gleitbahnen entlanggleitenden und daher verschleißanfälligen Kopfendstücke austauschbar angeordnet sein und insbesondere als in die Hutteller einschraubbare, mit gerundetem Kopf versehene und ggf. am Kopf gehärtete Schraubstifte ausgebildet sein. Die Gleitbahnen können vorteilhaft von lösbar am Rotationskörper befestigten, austauschbaren Ringsegmentelementen gebildet werden. Die austauschbaren Elemente können auch die Fertigungs- und Ersatzteilkosten senken, sofern sie bei Anschwemmfiltern mit unterschiedlichen Gehäuseabmessungen, mithin mit unterschiedlich breiten Rotationskörpern, eingesetzt werden. Besonders vorteilhaft kann hierbei jeder Rotationskörper wenigstens zwei zueinander und zur Trennplatte schräggestellte Flügel, Befestigungsplatten od.dgl. und/oder zwei zueinander gegenläufig angestellte Schrägen zur Befestigung der austauschbaren Elemente aufweisen, so daß die Ringsegmente selbst jeweils eine gleichmäßige Tiefe aufweisen können und die Speicherung der kinetischen Antriebsenergie für den Reinigungsimpuls über die angewinkelte Stellung der Flügel bzw. Schrägen des Rotationskörpers erzielt wird.

Weitere Vorteile und Ausgestaltungen der Erfindung ergeben sich aus der nachfolgenden Beschreibung der Zeichnung, in der beispielhaft Ausführungsbeispiele dargestellt sind.

In der Zeichnung zeigen:
- **Fig. 1**: schematisch einen Schnitt durch einen erfindungsgemäßen Anschwemmfilter;
- **Fig. 2A**: in einem Detailschnitt eine in der Trennplatte gelagerte Filterkerze vor der Impulseinleitung;
- **Fig. 2B**: die Ansicht aus Fig. 2A unmittelbar nach der Impulseinleitung;
- **Fig. 3**: perspektivisch eine Ausführungsform eines Rotationskörpers;
- **Fig. 4**: eine Schnittansicht gem. IV-IV in Fig. 3;
- **Fig. 5**: die Lagerung der Trennplatte in der Gehäusewandung;
- **Fig. 6A**: eine zweite Ausführungsform der Filterkerzenlagerung in Ansicht entsprechend Fig. 2A;
- **Fig. 6B**: die Ausführungsform nach Fig. 6A unmittelbar nach der Impulseinleitung;
- **Fig. 7**: Aufbau und Antriebskonzept für einen modifizierten Anschwemmfilter mit zwei Rotationskörpern;
- **Fig. 8**: Aufbau und Antriebskonzept für einen modular aufgebauten Anschwemmfilter mit mehreren Rotationskörpern und hoher Gesamtfilterfläche; und
- **Fig. 9**: eine alternative Ausführungsform für einen Rotationskörper mit auswechselbaren Gleitbahnen.

Der schematisch dargestellte, insgesamt mit 10 bezeichnete Anschwemmfilter für die Filtrierung z.B. von Schmiermitteln und Kühlschmiermitteln weist ein zylindrisches Filtergehäuse 1 mit einem Gehäuseunterteil 2 und einem Gehäuseoberteil 3 auf. Die beiden Gehäuseteile 2, 3 sind über eine Flanschverschraubung 4 lösbar miteinander verbunden. Eine im Innern des Filtergehäuses 10 in der Trennebene zwischen Gehäuseunterteil 2 und Gehäuseoberteil 3 angeordnete Trennplatte 5 unterteilt den Innenraum des Filtergehäuses 1 in eine untere Trübekammer 6 und eine obere Filtratkammer 7. In die Trübekammer 6 mündet ein Einlaß 8 für das zu filternde Medium. Entsprechend weist die Filtratkammer 7 einen Auslaß 9 auf, um das gefilterte Filtrat z.B. in einen nicht dargestellten Schmiermittelkreislauf zurückfließen zu lassen. Am Boden des Gehäuseunterteils 2 ist eine schwenkbare Absperrklappe 11 angeordnet, um den zuvor über eine nicht dargestellte Trockeneinrichtung, z.B. eine Druckgaseinleitung, getrockneten Filterkuchen 13 austragen zu können.

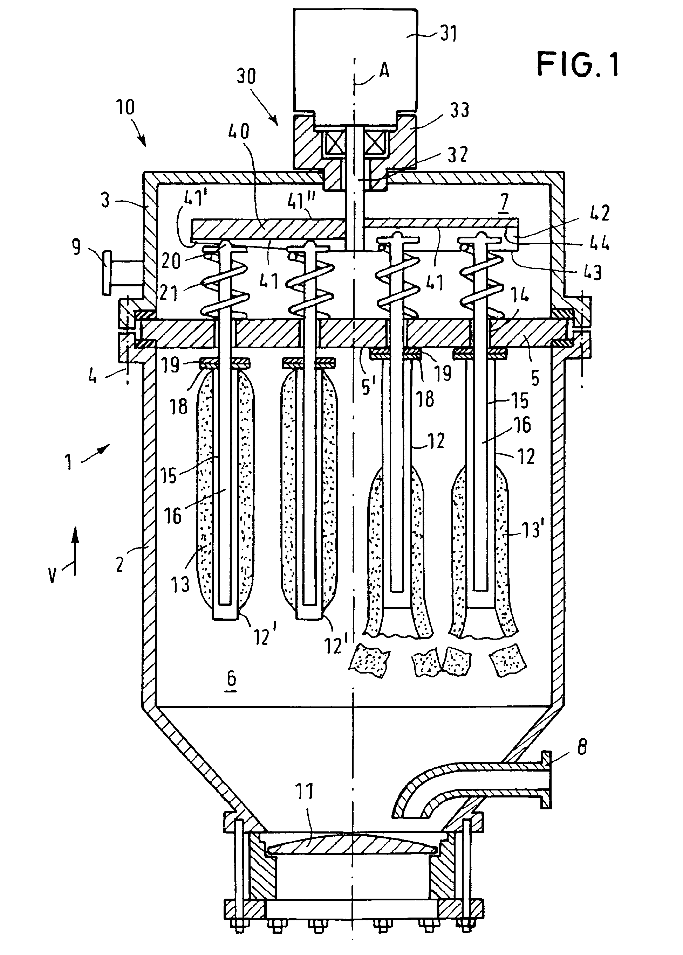

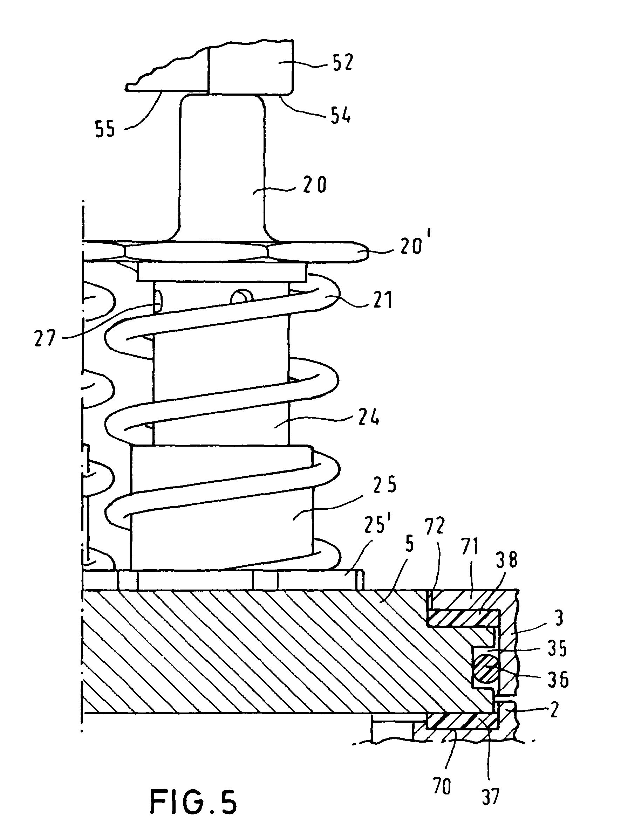

Die Trennplatte 5 ist als Siebplatte mit einer entsprechenden Anzahl von konzentrisch um die Mittelachse A angeordneten Bohrungen 14 ausgeführt. Die Bohrungen 14 werden von Steigrohren 15 durchgriffen, die unterhalb der Trennplatte 5 von Filterkerzen 12 umschlossen sind, so daß durch die Filtergewebe der Filterkerzen 12 hindurch filtrierte Flüssigkeit in den Innenraum der Filterkerzen 12 eindringen, in einen Steigkanal 16 der Steigrohre 15 aufsteigen und über in Fig. 1 nicht dargestellte Austrittsbohrungen 27 (fig. 5) in die Filtratkammer 7 als gefiltertes Filtrat übertreten kann. Der Steigkanal 16 verbindet mithin die Trübekammer 6 mit der Filtratkammer 7. Die einzelnen Filterkerzen 12 sind mittels der Steigrohre 15 in den abgedichteten Bohrungen 14 axial beweglich geführt, wie noch erläutert werden wird.

Die in Fig. 1 linken Filterkerzen 12' sind relativ zu den in Fig. 1 rechten Filterkerzen 12 axial weiter in die Trübekammer 6 hineinverschoben, so daß der von einer Kopfplatte 18 und einem Dämpfungsring 19 gebildete Anschlag der Filterkerzen 12 in der linken Hälfte der Fig. 1 von der Unterseite 5' der Trennplatte 5 beabstandet ist, während bei den in Fig. 1 rechts gezeigten Filterkerzen 12 der Dämpfungsring 19 unmittelbar an der Unterseite 5' der Trennplatte 5 anliegt. Um einen Kraftspeicher vorzusehen und die Filterkerzen 12, 12' in ihrer hängenden Anordnung innerhalb des Filtergehäuses 1 axial vorzuspannen, sind zwischen der Trennplatte 5 und hutförmigen Kopfendabschnitten 20 der Steigrohre 15 innerhalb der Filtratkammer 7 Federn 21 angeordnet. Die Axialbewegung (Rückbewegung) der Filterkerzen 12 wird in Richtung des Pfeiles V durch den vom Dämpfungsring 19 und Kopfplatte 18 gebildeten Anschlag begrenzt.

Wie die Fig. 1 weiter zeigt, haftet ein Filterkuchen 13 am Außenumfang der in Fig. 1 linken Filterkerzen 12' an, während der Filterkuchen 13' von den in Fig. 1 rechts gezeigten Filterkerzen 12 bereits gelöst wurde. Um das Lösen der Filterkuchen 13' und damit eine Reinigung des Anschwemmfilters 10 zu erzielen, ist eine insgesamt mit 30 bezeichnete Reinigungseinrichtung vorgesehen, die einen außerhalb des Filtergehäuseoberteils 3 angeordneten Elektroantrieb 31 umfaßt, dessen Abtriebswelle 32 in einer zentral am Filtergehäuseoberteil 3 angeordneten Drehdurchführung 33 gelagert ist. Das untere Ende der Abtriebswelle 32 ist drehfest mit einer rotierenden Scheibe 40 verbunden, die sich innerhalb der Filtratkammer 7 drehen kann. Die Scheibe 40 weist, wie zumindest schematisch in Fig. 1 zu erkennen ist, an der unteren Scheibenflachseite 41' eine wendelförmige Gleitbahn 41 auf, so daß zwischen einem mit 44 bezeichneten Gleitbahnanfang und einem mit 43 bezeichneten Gleitbahnende ein stufenförmiger Absatz 42 entsteht. Der rechtwinklig zur einen Scheibenrückseite 41" ausgebildete Absatz 42 bildet mithin einen Versatz zwischen dem Gleitbahnanfang 44 und dem Gleitbahnende 43, wie schematisch in der rechten Hälfte der Fig. 1 zu erkennen ist.

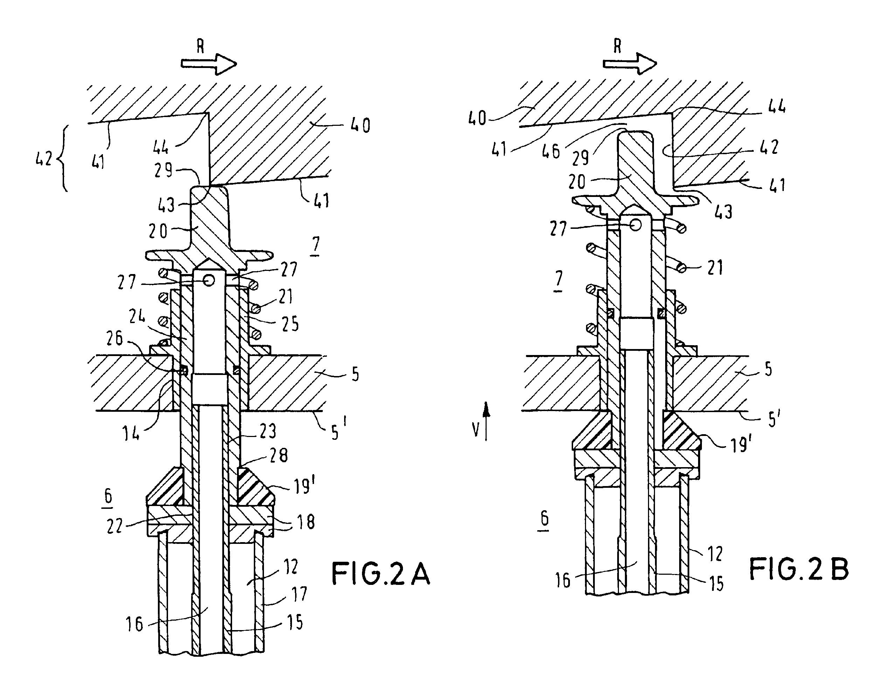

Da sich die Scheibe 40 dreht, gleiten die Kopfstücke 20 mit ihren Stirnenden 29 entlang der Gleitbahnen 41 und werden kontinuierlich durch das wendelförmige Ansteigen der Gleitbahn von der Lage gem. Fig. 1 rechte Hälfte über die in Fig. 1 linke Hälfte gezeigte Lage angehoben, bis sie unter vollständigem Spannen der Feder 21 mit den Kopfendstücken 20 gegen das Gleitbahnende 43 anliegen. Dieser Zustand ist am besten in Fig. 2A zu erkennen, auf die nun Bezug genommen wird. Das hutförmige Kopfendstück 20 ist bei der Rotationsbewegung der Scheibe 40 in Pfeilrichtung R durch den sich kontinuierlich verringernden Abstand zwischen der Trennwand 5 und der Gleitbahn 41 gegen die Federkraft der Feder 21 auf die Trennplatte 5 zu verschoben worden, so daß gem. Fig. 2A die Filterkerze 12 bzw. der hier kegelstumpfförmige Dichtungsring 19' seinen Maximalabstand von der Unterseite 5' der Trennplatte 5 hat. Da sich die Scheibe 40 dreht, gelangt die Scheibe 40 unmittelbar danach in die in Fig. 2B gezeigte Lage. Der Kopfendabschnitt 20 liegt nicht mehr an der Gleitbahn 41 an, da sich das Gleitbahnende 43 wegbewegt hat. Die in der Feder 21 zuvor gespeicherte Federkraft kann sich in Pfeilrichtung V entladen und die Filterkerze 12 zusammen mit dem Steigrohr 15 und dem Kopfendabschnitt 20 in Pfeilrichtung V beschleunigen. Dieser Beschleunigungsimpuls wird abrupt abgebremst, wenn die Filterkerze 12 mit dem hohlkegelstumpfförmigen Dämpfungsring 19' gegen die Unterseite 5' der Trennplatte 5 anschlägt.

Dieser Zustand ist sowohl in Fig. 2B als auch in der rechten Hälfte der Fig. 1 gezeigt, auf die nun wieder Bezug genommen wird. Wie in Fig. 1 zu erkennen ist, wird einerseits durch die Beschleunigungsbewegung der Filterkerzen 12, andererseits durch den Aufschlagimpuls der Filterkerze 12 gegen die Unterseite 5' der Trennplatte 5 der Filterkuchen 13' von dem Außenmantel der Filterkerzen 12 gelöst, so daß er nach unten abfällt und über die Absperrklappe 11 ausgetragen werden kann. In den gezeigten Ausführungsbeispielen ist der Abstand zwischen Gleitbahnanfang 44 und Trennplatte 5 derart bemessen, daß die Kopfendstücke 20 am Ende der Rückbewegung nicht gegen den Rotationskörper 40 stoßen, d.h. kein Impuls in die Rotationsscheibe übertragen wird. Es ist mithin vorzugsweise vorgesehen, daß ein Spalt 46 zwischen dem Stirnende 29 und dem Gleitbahnbereich 41 nahe des Gleitbahnanfangs 44 verbleibt, wenn die Filterkerzen 12 in ihre Ausgangsplatten zurückkehren.

Da sich die von dem Elektroantrieb 31 angetriebene Scheibe 40 kontinuierlich fortbewegt, werden bei einer 360°-Umdrehung der Scheibe 40 sämtliche im Filtergehäuse angeordneten Filterkerzen 12, 12' zuerst durch die ansteigende Gleitbahn 41 vorgespannt, anschließend durch den stufenförmigen Absatz 42 impulsartig beaufschlagt, so daß der Filterkuchen 13, 13' von allen Filterkerzen 12 abfallen kann. Da allerdings die Filterkerzen nur einzeln bzw. gruppenweise mit dem Impuls beaufschlagt werden, sind sowohl die Geräuschbelastung als auch die beim Reinigen erzeugten Vibrationen deutlich geringer als beim Stand der Technik. Dieses Ergebnis wird insbesondere durch die Verwendung des Rotationskörpers (Scheibe 40) mit stufenförmigen Absatz 42 erzielt.

Der Aufbau und die Lagerung der Filterkerzen an der Trennplatte 5 wird nun unter Bezugnahme auf die Fig. 2A und 2B genauer erläutert. Wie die Fig. 2A, 2B zeigen, umschließen die Filtergewebe 17 der Filterkerzen 12 ein hohles Steigrohr 15, das einen mit 16 bezeichneten Steigkanal im Innern aufweist. Die Filtergewebe 17 der Filterkerzen 12 sind endseitig geschlossen und hierzu an den in Fig. 2A und 2B dargestellten oberen Enden in einer mehrteiligen, mit einem Innengewinde 22 versehenen Kopfplatte 18 befestigt. Das Steigrohr 15 weist an seinem oberen Ende ein Außengewinde 23 auf, so daß die Kopfplatte 18 und das Steigrohr 23 miteinander verschraubt werden können. Auf das Außengewinde 23 ist von oben ein Kopfabschnitt 24 aufgeschraubt, der axial beweglich in einer Hülse 25 gelagert ist, die in eine Bohrung 14 der Trennplatte 5 eingeschraubt ist. Ein O-Ring 26 verhindert, daß Flüssigkeit zwischen Hülse 25 und Kopfabschnitt 24 durchtreten kann. Der Steigkanal 16 mündet in umfangsverteilte Austrittsbohrungen 27, aus denen Filtrat in die Filtratkammer 7 überströmt. Der hier hohlkegelstumpfförmige Dämpfkörper 19' ist zwischen der Kopfplatte 18 und einer Ringschulter 28 am unteren Ende des Kopfabschnitts 24 eingeklemmt.

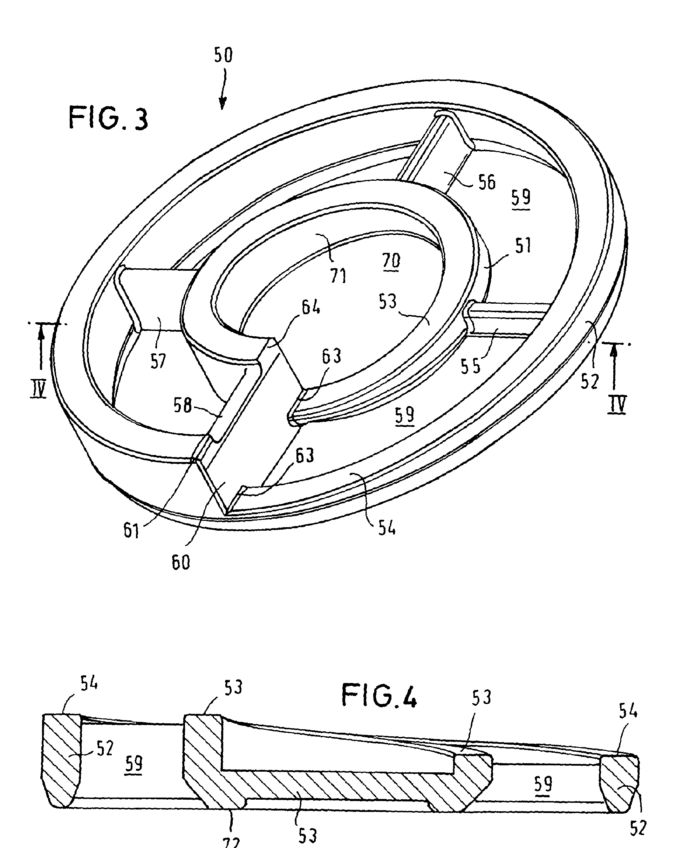

Die Fig. 3 und 4 zeigen ein alternatives Ausführungsbeispiel für einen Rotationskörper. Der hier mit 50 bezeichnete Rotationskörper ist z.B. als Gußteil aus Metall hergestellt und weist einen inneren wendelförmigen Ring 51 und einen äußeren wendelförmigen Ring 52 auf, die mit ihren oberen Stirnflächen Gleitbahnen 53 bzw. 54 bilden. Die Ringe 51, 52 sind über Radialstege 55, 56, 57, 58 verbunden, so daß jeweils zwischen zwei Stegen 55, 56, 57, 58 segmentförmige Aussparungen 59 entstehen. In Fig. 3 ist ein sich in Bewegungsrichtung an die Absatzkante 61 anschließender stufenförmige Absatz 60 zu erkennen. Der Absatz 60 bildet mithin den Übergang zwischen den Gleitbahnanfängen 63 und den Gleitbahnenden 64, die mit der Absatzkante 61 zusammenfallen. Die Antriebskopplung des Rotationskörpers 50 mit der Abtriebswelle des Elektroantriebs erfolgt auf nicht gezeigte Weise am Zentralloch 70, z.B. an dessen Umfangswand 71 oder an der Rückseite 72 der Umfangswand 71. Die wendelförmigen Gleitbahnen 52, 53 bewirken die Verschiebung und Vorspannung der Filterkerzen bzw. Kopfendstücke der Filterkerzen wie unter Aufladen der Federn 21, wie zuvor unter Bezugnahme auf die Fig. 1 und 2A, 2B erläutert wurde.

Fig. 5 zeigt beispielhaft und ausschnittsweise die Lagerung der Trennplatte 5 in der Teilungsebene zwischen Gehäuseunterteil 2 und Gehäuseoberteil 3. Die Trennplatte 5 weist an ihrem Außenumfang eine Ringnut 35 auf, in der ein O-Ring 36 angeordnet ist, um die Trennplatte 5 am Umfang gegen das Gehäuseoberteil 3 abzudichten. Um die beim Aufschlagen der hier nicht gezeigten Filterkerzen 12 auf die Trennplatte 5 entstehenden Vibrationen und Geräusche zu dämpfen, ist ein erster Dämpfungsring 37 zwischen dem oberen Stirnende 70 des Gehäuseunterteils 2 und der Trennplatte 5 eingelegt und ein zweiter Dämpfungsring 38 zwischen einer Radialschulter 71 des Gehäuseoberteils 3 und der Trennplatte 5 eingelegt. Die Trennplatte 5 weist hierzu eine der Radialschulter 71 zugewandte umlaufende ringförmige Aussparung 72 auf. Fig. 5 zeigt auch, daß der hutförmige Kopfendabschnitt 20 des Kopfabschnitts 24 einen als Mutter ausgeführten Hutteller 20' aufweist und daß auch die Hülse 25 mit einer Mehrkantmutter 25' versehen ist, mit denen die Filterkerzen in den hier nicht gezeigten Bohrungen der Trennplatte 5 montierbar und demontierbar sind.

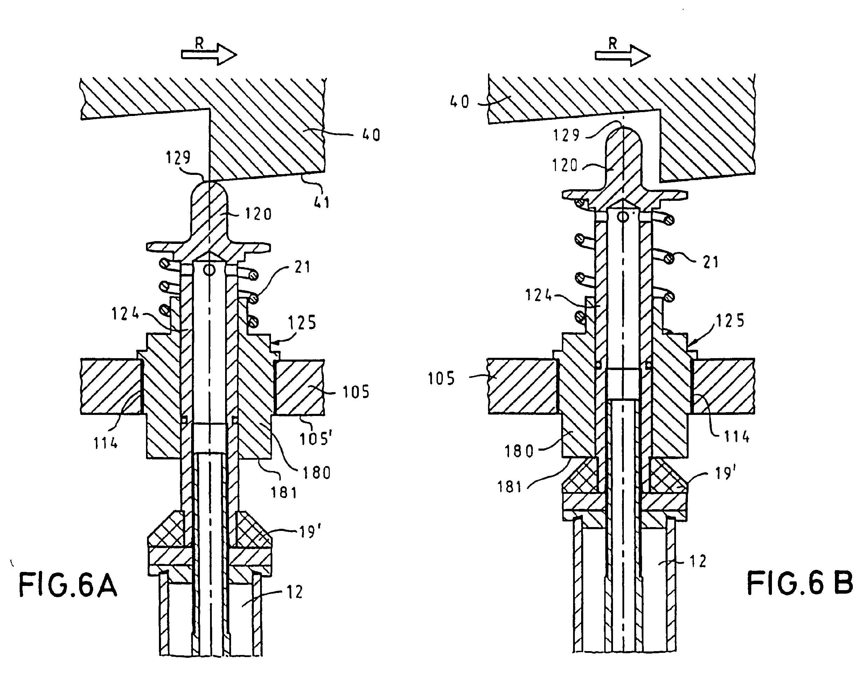

Die Fig. 6A, 6B zeigen eine insbesondere für hohe Betriebsstunden vorteilhafte und zuverlässige Ausführungsform für die Filterkerzen und deren Lagerung in der Trennplatte 105. Von der vorstehenden Beschreibung abweichende Bauteile sind mit um 100 erhöhte Bezugszeichen versehen. Die Bohrungen 114 in der Trennplatte 105 haben einen Durchmesser, der gleich oder größer als der Außendurchmesser der Filterkerzen 12 bzw. Dämpfungsringe 19' ist. In die Bohrungen 114 sind Hülsen 125 mit relativ massiven Hülsenwänden eingeschraubt. Die Hülsen 125 weisen einstückige Hülsenfortsätze 180 auf, die über die Trennplattenunterseite 105' hinausragen. Die Hülsenfortsätze 180 sorgen für eine vergleichsweise lange Führung der Kopfstücke 124, so daß es selbst nach zahlreichen Reinigungsimpulsen nicht zu einem Schlackern der Filterkerzen 12 in den Trennplatten 105 kommen kann. Wie insbesondere die Fig. 6B zeigt, bewirkt die Verbreiterung und Verlängerung der Hülsen 125 auch, daß die Dämpfungsringe 19' gegen die Stirnendseiten 181 der Hülsenfortsätze 180 und somit nicht mehr gegen die Plattenunterseite 105' anschlagen. Ferner ist der Reibkontakt zwischen den Kopfstücken 124 bzw. Kopfendstücken 120 und den Gleitbahnen 41 der Rotationskörper 40 durch die halbkugelförmige Ausgestaltung der Stirnenden 129 der Kopfendstücke 120 erheblich reduziert. Die Kopfendstücke 120 wirken daher mit ihren Stirnenden 129 nur punktförmig mit den Gleitbahnen 41 zusammen.

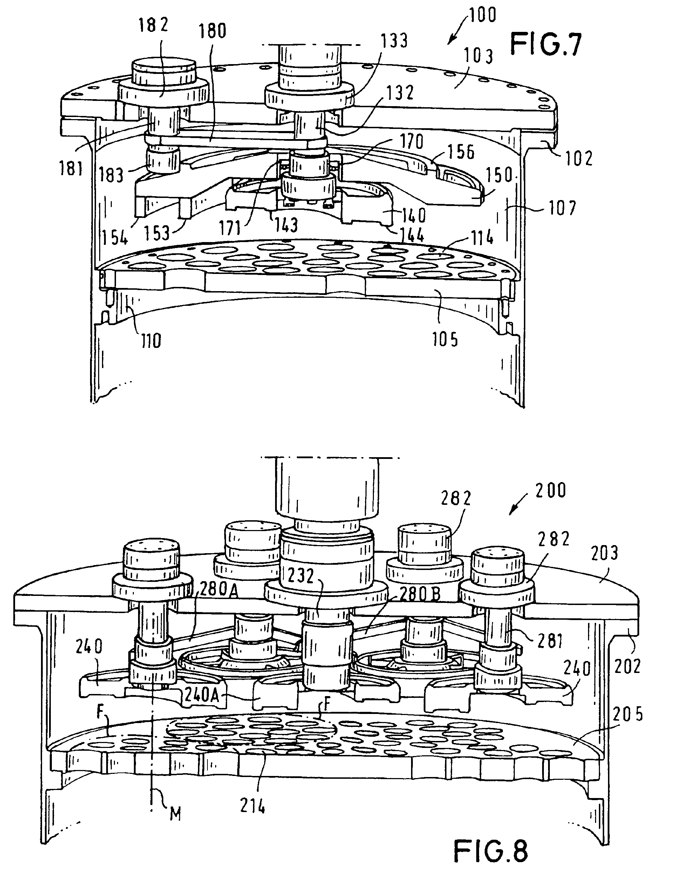

Fig. 7 zeigt einen Anschwemmfilter 100 mit einer Trennplatte 105, die im Abstand unterhalb der Trennebene zwischen Gehäuseunterteil 102 und den Deckel bildendem Gehäuseoberteil 103 an einem im Innern des Gehäuseunterteils 102 ausgebildeten Flanschring 110 montiert ist und konzentrisch um eine Mittelachse angeordneten Bohrungen 114 aufweist, in denen nicht dargestellte Filterkerzen montiert sind; die Montage und Ausgestaltung der Filterkerzen ist identisch wie bei dem weiter oben beschrieben Ausführungsbeispiel. In der Filtratkammer 107 sind zwei Rotationskörper 140, 150 angeordnet, die hinsichtlich der Gleitbahnen 143, 144, 153, 154, Absätze und Reinigungsimpulserzeugung im wesentlichen denselben Aufbau und gleiche Wirkungsweise wie der mit Bezug zu Fig. 3 beschriebene Rotationskörper haben, so daß eine erneute Beschreibung hier nicht erfolgen muß. Der innere Rotationskörper 140 rotiert innerhalb der von dem äußeren Rotationskörper 150 überspannten Ringfläche und seine Gleitbahnen 143, 144 sind auf inneren Filterkreisbahnen angeordneten Filterkerzen zugeordnet. Im gezeigten Ausführungsbeispiel ist der innere Rotationskörper 140 drehfest mit einer Antriebswelle 132 verbunden, die den Gehäusedeckel 103 zentral durchgreift, an diesem mit der abdichtenden Wellendurchführung 133 gelagert ist und mit dem nicht dargestellten Elektroantrieb angetrieben wird. An einem Wellenabsatz 134 der Antriebswelle 132 ist der äußere Rotationskörper 150 auf geeignete Weise mittels der in dessen Zentralloch 170 montierten Kugellager 171 gelagert, so daß er frei um die Antriebswelle 132 rotieren kann. Die Rotationskörper 140, 150 sind über ein hier mittels Riemen 180 angedeutetes Getriebe miteinander gekoppelt; der Riemen 180 umschlingt den Schaft der Antriebswelle 132 und den Schaft einer mittels einer Lageranordnung 182 am Gehäusedeckel 102 gelagerten Übertragungswelle 181. Das untere Ende 183 der Übertragungswelle 181 ist mit einer Außenverzahnung versehen, die in einen Zahnkamm 156 an der Rückseite des Rotationskörpers 150 eingreift, um die Drehung der Antriebswelle 132 auf den äußeren Rotationskörper 150 zu übertragen. Mit dem Getriebe wird hierbei eine Drehzahlübersetzung erzeugt, die derart gewählt ist, daß die Umfangsgeschwindigkeiten des inneren Rotationskörpers 140 und des äußeren Rotationskörpers 150 etwa gleich sind, d.h. eine Drehzahlübersetzung, die reziprok zum Verhältnis der Durchmesser der Rotationskörper 140, 150 ist. Durch diese Maßnahme kann die Umfangsgeschwindigkeit des äußeren Rotationskörpers selbst bei mehreren Filterkreisen auf eine strömungs- und antriebstechnisch akzeptable Größe reduziert werden.

Fig. 8 zeigt einen Anschwemmfilter 200 mit hoher Filtrierleistung aufgrund großer Abmessungen und hoher Anzahl von Filterkerzen. Wie beim zuvor beschriebenen Ausführungsbeispiel stützt sich eine Trennplatte 205 an einem Flanschring 207 im Gehäuseunterteil 202 ab. Die die Filterkerzen aufnehmenden Bohrungen 214 sind in mit den strichpunktierten Linien angedeuteten Filterkerzenfelder F jeweils konzentrisch um eine zugehörige Feldmittelachse M angeordnet. Jedem Filterkerzenfeld F ist ein Rotationskörper 240 zugeordnet, der drehfest mit einem auf der Feldmittelachse M angeordneten, mittels der Lageranordnung 282 am Gehäusedeckel 203 gelagerten Wellenstumpf 281 verbunden ist. In Fig. 8 sind mehrere Filterkerzenfelder F und Rotationskörper 240 symmetrisch um den zentralen, mit der Antriebswelle 232 verbundenen Rotationskörper 240A angeordnet. Die Rotationskörper 240, 240A haben untereinander einen identischen Aufbau und ihre Funktionsweise entspricht derjenigen des mit Bezug zu Fig. 3 beschriebenen Rotationskörpers. Durch den modularen Aufbau mit mehreren Rotationskörpern 240 sind der Anzahl der vorhandenen Filterkerzen kaum Grenzen gesetzt. Die Umfangsgeschwindigkeiten der einzelnen Rotationskörper 240 sind relativ niedrig und mittels der die Wellenstümpfe 281 und die Antriebswelle 232 umschlingenden Übertragungsriemen 280A, 280B an deren Drehzahl gekoppelt.

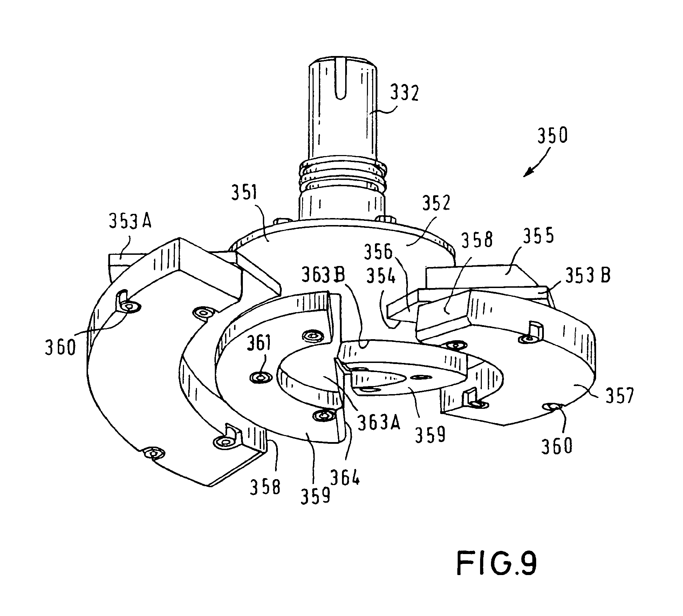

Fig. 9 zeigt ein weiteres alternatives Ausführungsbeispiel für einen Rotationskörper 350, der bei sämtlichen zuvor beschriebenen Ausgestaltungen des Anschwemmfilters eingesetzt werden kann. Der Rotationskörper 350 besteht hier aus einem mit der Antriebswelle 332 drehfest verbundenen Zylinderkörper 351, an dessen Außenwandung 352 flügelartige Befestigungsplatten 353A, 353B befestigt sind. Die zylindrisch ausgebildeten Innenseiten 354 der Befestigungsplatten 353A, 353B liegen an der Außenwandung 352 an, wobei zur Versteifung der Anbindung Stützrippen 355 zwischen den Oberseiten der Befestigungsplatten 353A, 353B und der Außenwandung angeschweißt, angeklebt oder ausgebildet sind. Die Befestigungsplatten 353A, 353B sind hierbei winklig zueinander und zu einer senkrecht zur Antriebswellenachse sich erstreckenden Ebene angestellt, so daß sie im Montagezustand des Rotationskörpers 350 schräg zur in Fig. 9 nicht dargestellten Trennplatte stehen. An den der Trennplatte zugewandten Unterseiten sind Ringsegmentelemente 357 (Pratzen) austauschbar mittels Schrauben 360 angeschraubt, die im Betrieb Gleitbahnen für die Kopfendstücke der Filterkerzen bilden. Für weiter innen liegende Filterkerzen weist der Rotationskörper separate Ringsegmentelemente 359 auf, deren Abmessungen und Radien kleiner als die der Ringsegmentelemente 357 sind. Zur Befestigung dieser inneren Ringsegmentelemente 357 mittels Schrauben 361 im gewünschten Anstellwinkel ist die Zylinderunterseite mit zwei gegenläufigen, jeweils eine Hälfte der Zylinderunterseite bildenden Schrägen 363A, 363B versehen, deren Neigung im wesentlichen der Neigung der Befestigungsplatten 353A, 353B entspricht. Durch die winklige Anstellung der Befestigungsplatten bzw. Schrägen können die Kopfendstücke der Filterkerzen stoßfrei mit den Gleitbahnen in Kontakt kommen und dann mit fortschreitender Weiterdrehung des Rotationskörpers 350 unter Speichern der für Reinigungsimpuls benötigten Energie im Kraftspeicher nach unten gedrückt werden, bis sie das jeweilige Elementende 358, 364, mithin das Ende der zugehörigen Gleitbahnen, erreichen und die im Kraftspeicher gespeicherte kinetische Energie in Bewegungsenergie umwandeln.

Es versteht sich, daß hier beispielhaft bevorzugte Ausführungsbeispiele näher erläutert wurden. Nicht gezeigt, aber in den Schutzbereich fallend, sollen auch Ausführungsformen sein, bei denen mehrere stufenförmige Absätze entlang einer Gleitbahn bzw. auf der den Kopfendabschnitten zugewandten Flachseite der Rotationskörper angeordnet sind. Die Absätze können auch durch Nokken od.dgl. mit steiler Abrißkante gebildet werden. Auch für den Aufbau des Gehäuses und die Anordnung der Dichtungen ergeben sich für den Fachmann zahlreiche Variationsmöglichkeiten, die unter den Schutzbereich fallen sollen. So kann der Auslaß auch außerhalb des Gehäuses angeordnet sein, in dem z.B. ein Austrittsquerschnitt in oder hinter der Drehdurchführung vorgesehen wird. Die Trennplatte kann auch unter Zwischenlage der Dämpfungsmaterialien gegen einen Flanschring verschraubt werden, der an der Innenseite des Gehäuses befestigt oder ausgebildet ist. Bei dieser Ausführungsform liegt die Trennplatte dann nicht mehr in sondern unterhalb der Teilungsebene der Gehäuseteile und zweite Gehäuseteil dient als oberer Abschlußdeckel.

## Patentansprüche

1. Anschwemmfilter für die Filtrierung von strömenden Medien, insbesondere Schmier- und Kühlschmiermitteln, der eine im Filtergehäuse angeordnete und das Filtergehäuse in eine untere Trübekammer und eine obere Filtratkammer trennende Trennplatte, an der Filterkerzen, die einen die Kammern verbindenden Steigkanal umschließen, zum Auffangen von Verunreinigungen oder Feststoffen aus dem Medium angeschlossen sind, und der eine Einrichtung zum Lösen eines aus den ausgefilterten Feststoffen oder Verunreinigungen bestehenden Filterkuchens aufweist, wobei die Steigrohre (16) der Filterkerzen (12) axialbeweglich an der Trennplatte (5) gelagert sind, **dadurch gekennzeichnet, daß** die Einrichtung einen Rotationskörper (40; 50) aufweist, mit dem die Filterkerzen (12) einzeln oder gruppenweise mit einem Impuls zum Lösen des Filterkuchens beaufschlagbar sind, wobei eine Rotation des Rotationskörpers (40;50) eine Axialbewegung der Steigrohre (16) zum Erzeugen des Impuls bewirkt.

2. Anschwemmfilter nach Anspruch 1, **dadurch gekennzeichnet, daß** der Rotationskörper (40; 50) zur Erzeugung des Impulses wenigstens einen stufenförmigen Absatz (42; 60) aufweist.

3. Anschwemmfilter nach Anspruch 1 oder 2, **dadurch gekennzeichnet, daß** für jede Filterkerze (12) ein Energiespeicher, vorzugsweise eine Feder (21), für eine Rückbewegung der Filterkerzen vorgesehen ist, der bei einer Rotation des Rotationskörpers aufgeladen und entladen wird.

4. Anschwemmfilter nach einem der Ansprüche 1 bis 3, **dadurch gekennzeichnet, daß** der Rotationskörper (40; 50) in der Filtratkammer (7) angeordnet ist.

5. Anschwemmfilter nach einem der Ansprüche 1 bis 4, **dadurch gekennzeichnet, daß** die Filterkerzen (12) konzentrisch um eine Mittelachse (A) angeordnet sind, wobei der Rotationskörper (40; 50) für jeden konzentrischen Filterring eine kreisförmige bzw. wendelförmige Gleitbahn (41; 53, 54) mit stufenförmigem Absatz (42; 60) aufweist.

6. Anschwemmfilter nach einem der Ansprüche 1 bis 5, **dadurch gekennzeichnet, daß** der Rotationskörper mehrere Absätze aufweist, wobei vorzugsweise auf Kreisbahnen mit größerem Radius mehr Absätze als auf Kreisbahnen mit kleinerem Radius angeordnet sind.

7. Anschwemmfilter nach einem der Ansprüche 1 bis 6, **dadurch gekennzeichnet, daß** der Rotationskörper eine Scheibe (40) ist und der oder die Absätze (42) in den an einer der Scheibenflachseiten (41') ausgebildeten Gleitbahnen (41) einen Versatz (42) zwischen Gleitbahnteilstücken (43, 44) bilden.

8. Anschwemmfilter nach Anspruch 7, **dadurch gekennzeichnet, daß** die Scheibe vorzugsweise segmentförmige Öffnungen in der Scheibenflachseite aufweist.

9. Anschwemmfilter nach einem der Ansprüche 1 bis 8, **dadurch gekennzeichnet, daß** mehrere wendelförmige, über Radialstege (55, 56, 57, 58) verbundene Ringe (51, 52) den Rotationskörper (50) bilden.

10. Anschwemmfilter nach einem der Ansprüche 1 bis 9, **dadurch gekennzeichnet, daß** der Steigkanal (16) in einem oberen Kopfstück (24; 124) endet, das axial beweglich an der Trennplatte (5; 105) gelagert ist und mittels der Gleitbahnen (41; 53, 54) in Axialrichtung bewegbar ist.

11. Anschwemmfilter nach Anspruch 10, **dadurch gekennzeichnet, daß** zwischen dem Kopfstück (24; 124) oder einem Kopfendstück (20; 120) und der Trennplatte (5) ein Kraftspeicher wie eine Feder (21) vorgesehen ist, der durch die Axialbewegung des Steigkanals aufladbar ist.

12. Anschwemmfilter nach Anspruch 10 oder 11, **dadurch gekennzeichnet, daß** das Kopfstück (124) in der Trennplatte (105) mittels einer Hülse (125) gelagert ist, die mit einem Hülsenfortsatz (180) über die Trennplattenunterseite (105') hinausragt.

13. Anschwemmfilter nach einem der Ansprüche 10 bis 12, **dadurch gekennzeichnet, daß** das Kopfstück (124) bzw. Kopfendstück (120) ein vorzugsweise halbkugelförmig gekrümmtes, mit den Rotationskörpern (40; 50) zusammenwirkendes Stirnende (129) aufweist.

14. Anschwemmfilter nach einem der Ansprüche 1 bis 13, **dadurch gekennzeichnet, daß** zwischen Filterkerze (12) und Trennplatte (5; 105) bzw. Hülsenstirnfläche (181) ein vorzugsweise ring- oder hohlkegelstumpfförmiger Dämpfungskörper (19; 19') angeordnet ist.

15. Anschwemmfilter nach einem der Ansprüche 1 bis 14, **dadurch gekennzeichnet, daß** die Trennplatte (5; 105) in der Gehäusewandung (2, 3) oder in einem an der Gehäusewandung ausgebildeten oder befestigten Flanschring gelagert ist, wobei zwischen Trennplatte (5; 105) und Gehäusewandung (2, 3) bzw. Flanschring Dämpfungsmaterialien (36, 37, 38) angeordnet sind.

16. Anschwemmfilter nach einem der Ansprüche 1 bis 15, **dadurch gekennzeichnet, daß** der Rotationskörper (40; 50) mittels eines außerhalb des Gehäuses (1) angeordneten Elektroantriebs (31) antreibbar ist.

17. Anschwemmfilter nach einem der Ansprüche 1 bis 16, **dadurch gekennzeichnet, daß** die Gleitbahnen (41; 53, 54) vom Gleitbahnanfang (44; 63) bis zum Gleitbahnende (43; 61, 64) kontinuierlich ansteigen.

18. Anschwemmfilter nach einem der Ansprüche 1 bis 17, **dadurch gekennzeichnet, daß** die Einrichtung einen Freilauf wie einen Hülsenfreilauf oder einen Sperrklinkenfreilauf für den Rotationskörper aufweist.

19. Anschwemmfilter nach einem der Ansprüche 1 bis 18, **dadurch gekennzeichnet, daß** die Einrichtung zum Lösen der Feststoffe mehrere Rotationskörper (140, 150; 240, 250) umfaßt, die vorzugsweise mittels eines einzigen gemeinsamen Antriebs antreibbar sind.

20. Anschwemmfilter nach einem der Ansprüche 1 bis 19, **gekennzeichnet durch** einen modularen Aufbau, wobei in einem Filtergehäuse (202, 203) mehrere konzentrisch um eine Feldachse (M) angeordnete Filterkerzen ein Filterkerzenfeld (F) bilden und jedem Filterkerzenfeld (F) ein auf der Feldachse (M) mittels Wellenstümpfen (281) am Gehäusedeckel gelagerter Rotationskörper (240) zugeordnet ist, wobei vorzugsweise die Wellen (281) der Rotationskörper über Zugmittel (280A, 280B) wie Zahnriemen oder Keilriemen oder Zahnräder mit der insbesondere zentral angeordneten Antriebswelle (232) gekoppelt sind und im Betrieb mit gleichen Drehzahlen umlaufen.

21. Anschwemmfilter nach einem der Ansprüche 1 bis 19, **dadurch gekennzeichnet, daß** die Filterkerzen konzentrisch um eine Mittelachse angeordnet sind und die Einrichtung zwei mittels eines Getriebes, vorzugsweise eines Zugmittelgetriebes (180), mit unterschiedlichen Drehzahlen rotierende Rotationskörper (140; 150) umfaßt, wobei die Drehzahlübersetzung des Getriebes vorzugsweise derart gewählt ist, daß die Rotationskörper (140; 150) gleiche Umfangsgeschwindigkeiten aufweisen.

22. Anschwemmfilter nach einem der Anspruch 21, **dadurch gekennzeichnet, daß** der eine Rotationskörper (140) drehfest mit der Antriebswelle (132) verbunden ist und der zweite Rotationskörper (150) drehbar an der Antriebswelle (132) gelagert ist.

23. Anschwemmfilter nach einem der Ansprüche 1 bis 22, **dadurch gekennzeichnet, daß** die Kopfendstücke austauschbar sind und insbesondere als in die Hutteller einschraubbare, mit gerundetem Kopf versehene und ggf. am Kopf gehärtete Schraubstifte ausgebildet sind und/oder daß die Gleitbahnen von lösbar am Rotationskörper befestigten, austauschbaren Ringsegmentelementen (357, 359) gebildet sind.

24. Anschwemmfilter nach Anspruch 23, **dadurch gekennzeichnet, daß** der Rotationskörper (350) wenigstens zwei zueinander und zur Trennplatte schräggestellte Flügel , Befestigungsplatten (353A, 353B) od.dgl. und/oder zwei zueinander gegenläufig angestellte Schrägen (363A, 363B) zur Befestigung der austauschbaren Elemente (357, 359) aufweist.

## Claims

1. Precoat filter for filtering flowing media, in particular lubricating and cooling lubricating means, comprising a separating plate arranged in the filter housing and separating the filter housing into a lower filtrant chamber and an upper filtrate chamber, to which are connected filter candles which enclose a riser channel connecting the chambers for catching contaminations or solids from the medium, and which comprises a device for loosening a filter cake consisting of the filtered solids and contaminations, wherein the riser channels (16) of the filter candles (12) are mounted to the separating plate in an axially movable manner, **characterized in that** the device comprises a rotary body (40; 50), with which the filter candles (12) can individually or in a group be loaded with a pulse for loosening of the filter cake, wherein the rotation of the rotary body (40; 50) effects an axially movement of the riser channels (16) to produce the pulse.

2. Precoat filter according to claim 1, **characterized in that** the rotary body (40; 50) for producing the pulse comprises at least one shoulder (42; 60) in the form of a step for producing the pulse.

3. Precoat filter according to claim 1 or 2, **characterized in that** for each filter candle (12), an energy storage device, preferably a spring (21), is provided for a backward movement of the filter candles, which energy storage device is loaded and unloaded by rotation of the rotary body

4. Precoat filter according to any of claims 1 to 3, **characterized in that** the rotary body (40; 50) is arranged in the filtrate chamber.

5. Precoat filter according to any of claims 1 to 4, **characterized in that** the filter candles (12) are arranged in a concentric manner around a center axis, whereby the rotary body (40; 50) comprises a circular or helical track (41; 53, 54) with a shoulder (42; 60) in the form of a step for each concentric filter ring.

6. Precoat filter according to one of claims 1 to 5, **characterized in that** the rotary body comprises several shoulders, whereby tracks with a larger radius preferably have arranged thereon more shoulders than tracks with a smaller radius.

7. Precoat filter according to one of claims 1 to 6, **characterized in that** the rotary body is a disk (40) and the shoulder or the shoulders (42) form a displacement (42) between track parts (43, 44) at the flat side (41') of the disk formed at the tracks (41)

8. Precoat filter according to claim 7, **characterized in that** the disk preferably comprises apertures in the shape of segments in the flat side of the disk.

9. Precoat filter according to one of claims 1 to 8, **characterized in that** several helical rings (51, 52) which are connected by radial webs (55, 56, 57, 58) form the rotary body (50).

10. Precoat filter according to one of claims 1 to 9,
**characterized in that** the riser channel (16) ends in an upper head piece (24; 124) which is mounted to the separating plate (5; 105) in an axially moveable manner, and which can be moved in the axial direction by means of the tracks (41; 53, 54).

11. Precoat filter according to claim 10, **characterized in that** an energy storage device such as a spring (21) is provided between the head piece (24; 124) or a head end piece (20; 120) and the separating plate (5) which can be loaded by the axial movement of the riser channel.

12. Precoat filter according to claim 10 or 11, **characterized in that** the head piece (124) is mounted in the separating plate (105) by means of a sleeve (125), which projects beyond the lower side (105') of the separating plate by means of a sleeve projection (180).

13. Precoat filter according to one of claims 10 to 12, **characterized in that** the head piece (124) or the head end piece (120) comprises a preferably semi-spherical arcuate front end (129) cooperating with the rotary bodies (40; 50).

14. Precoat filter according to one of claims 1 to 13, **characterized in that** a preferably ring-shaped or hollow frustoconical dampening body (19; 19') is arranged between the filter candle (12) and the separating plate (5; 105) or the sleeve front face (181).

15. Precoat filter according to one of claims 1 to 14, **characterized in that** the separating plate (5; 105) is mounted in the wall (2, 3) of the housing or in a flange ring formed or secured at the wall of the housing, whereby dampening materials (36, 37, 38) are arranged between the separating plate (5; 105) and the wall (2, 3) of the housing or the flange ring.

16. Precoat filter according to one of claims 1 to 15, **characterized in that** the rotary body (40; 50) can be driven by means of an electronic drive (31) arranged outside of the housing (1).

17. Precoat filter according to one of claims 1 to 16, **characterized in that** the tracks (41; 53, 54) climb continually from the track start (44; 63) to the track end (43; 61, 64).

18. Precoat filter according to one of claims 1 to 17, **characterized in that** the device comprises a freewheeling arrangement such as a sleeve freewheeling arrangement or a ratchet freewheeling arrangement for the rotary body.

19. Precoat filter according to one of claims 1 to 18, **characterized in that** the device for loosening the solids comprises several rotary bodies (140, 150; 240, 250), which can preferably be driven by means of a single common drive.

20. Precoat filter according to one of claims 1 to 19, **characterized by** a modular construction, whereby several filter candles which are arranged concentrically around a field axis form a filter candle field (P), and a rotary body mounted on the field axis (M) by means of the shaft ends (28 1) at the top of the housing is assigned to each candle field (F), whereby the shafts (281) of the rotary bodies are preferably coupled to the particularly centrally arranged drive shaft (232) by tensioning means such as cog belts or V-belts or gears and circulate with the same speeds during rotation.

21. Precoat filter according to one of claims 1 to 19, **characterized in that** the filter candles are arranged concentrically around a center axis and that the device comprises two rotary bodies (140; 150) which rotate by means of a gear; preferably a tension gear (180), with different speeds, whereby the speed translation of the gear is preferably chosen in such a way that the rotary bodies (140; 150) comprise the same circumferential speeds.

22. Precoat filter according to claim 21, **characterized in that** one rotary body (140) is connected to the drive shaft (132) in a non-rotary manner and that the second rotary body (150) is mounted at the drive shaft (132) in a rotary manner.

23. Precoat filter according to one of claims 1 to 22, **characterized in that** the head end pieces can be exchanged and are formed in particularl as screw pins which can be screwed into the cap plates, provided with a rounded head and possibly hardened at the head and/or that the tracks are formed by exchangeable ring segment elements (357, 359) which are secured to the rotary body in a detachable manner.

24. Precoat filter according to claim 23, **characterized in that** the rotary body (350) comprises at least two wings, mounting plates (353A, 353B) or the like which are oblique to one another and to the separating plate, and/or two obliques (363A, 363B) which are arranged in a counter-rotating manner with regard to one another for securing the exchangeable elements (357, 359).

## Revendications

1. Filtres à couches pour la filtration de milieux s'écoulant, en particulier de lubrifiants et lubrifiants de refroidissement, comprenant une plaque de séparation disposée dans un boîtier de filtration et séparant le boîtier de filtration en une chambre inférieure de trouble et une chambre supérieure de filtrat, à laquelle sont verrouillées des bougies de filtration entourant un canal d'ascension reliant les chambres pour retenir des impuretés et de la matière grasse du milieu et qui présente un dispositif pour libérer un gâteau de fibres obtenu à partir de la matière grasse et des impuretés filtrées, les tuyaux d'ascension (16) des bougies de filtration (12) étant montés à la plaque de séparation (5) d'une manière mobile axialement, **caractérisé en ce que** le dispositif comprend un corps de rotation (40 ; 50) par lequel les bougies de filtre (12) peuvent être entraînées individuellement ou groupées par une impulsion pour libérer le gâteau de filtre, une rotation du corps de rotation (40 ; 50) entraînant un déplacement axial des tuyaux d'ascension (16) pour obtenir l'impulsion.

2. Filtre à couches selon la revendication 1, **caractérisé en ce que** pour obtenir l'impulsion, le corps de rotation (40 ; 50) présente au moins un retrait étagé (42 ; 60).

3. Filtre à couches selon l'une des revendications 1 ou 2, **caractérisé en ce que** pour chaque bougie (12) est prévu un accumulateur d'énergie, de préférence un ressort (21) pour permettre le mouvement de rappel des bougies de filtre, qui lors d'une rotation du corps de rotation est tendu et relâché.

4. Filtre à couches selon l'une des revendications 1 à 3, **caractérisé en ce que** le corps de rotation (40 ; 50) est disposé dans la chambre à filtrat (7).

5. Filtre à couches selon l'une des revendications 1 à 4, **caractérisé en ce que** les bougies de filtre (12) sont disposées concentriquement autour d'un axe central (A), le corps de rotation (40 ; 50) présentant pour chaque anneau de filtre concentrique une piste de glissement (41 ; 53, 54) de forme circulaire ou en forme de spirale comportant un retrait étagé (42 ; 60).

6. Filtre à couches selon l'une des revendications 1 à 5, **caractérisé en ce que** le corps de rotation présente plusieurs retraits qui sont de préférence disposés en plus grand nombre sur les pistes circulaires à grand rayon que sur des pistes circulaires à plus petit rayon.

7. Filtre à couches selon l'une des revendications 1 à 6, **caractérisé en ce que** le corps de rotation est un disque (40) et le ou les retraits (42) forment dans les pistes de glissement (41) réalisées dans l'une des faces planes (41') du disque, un décalage entre des tronçons (43, 44) de piste de glissement.

8. Filtre à couches selon la revendication 7, **caractérisé en ce que** le disque comporte de préférence des évidements en forme de segment dans la face plane du disque.

9. Filtre à couches selon l'une des revendications 1 à 8, **caractérisé en ce que** le corps de rotation (50) est constitué par plusieurs anneaux hélicoïdaux (51, 52) reliés par des barres radiales (55, 56, 57, 58).

10. Filtre à couches selon l'une des revendications 1 à 9, **caractérisé en ce que** le canal d'ascension (16) se termine dans une pièce de tête (24 ; 124) qui est montée de façon axialement mobile dans la plaque de séparation (5 ; 105) et est déplaçable dans la direction axiale au moyen des pistes de glissement (41 ; 53, 54).

11. Filtre à couches selon la revendication 10, **caractérisé en ce qu'**entre la pièce de tête (24 ; 124) ou une pièce d'extrémité de tête (20 ; 120) et la plaque de séparation (5) est prévu un accumulateur de force tel qu'un ressort (21), qui se charge grâce au déplacement axial du canal d'ascension.

12. Filtre à couches selon la revendication 10 ou 11, **caractérisé en ce que** la pièce de tête (124) est montée dans la plaque de séparation (105) un moyen d'une douille (125) qui comporte un embout de douille (180) faisant saillie de la face inférieure (105') de la plaque de séparation.

13. Filtre à couches selon l'une des revendications 10 à 12, **caractérisé en ce que** la pièce de tête (124) ou la pièce d'extrémité de tête (120) présente une extrémité frontale (129) qui est de préférence arrondie en forme de demi-sphère coopérant avec le corps de rotation (40 ; 50).

14. Filtre à couches selon l'une des revendications 1 à 13, **caractérisé en ce qu'**entre les bougies de filtre (12) et la plaque de séparation (5 ; 105) ou la surface frontale (181) de la douille est disposé un corps d'amortissement (19 ; 19') de préférence annulaire ou tronconique creux.

15. Filtre à couches selon une des revendications 1 à 14, **caractérisé en ce que** la plaque de séparation (5 ; 105) est montée dans la paroi (2, 3) du boîtier ou dans une gorge annulaire réalisée dans ou fixée à la paroi du boîtier, des matériaux d'amortissement étant disposés entre la paroi de séparation (5 ; 105) et la paroi (2, 3) du boîtier ou la gorge annulaire.

16. Filtre à couches selon l'une des revendications 1 à 15, **caractérisé en ce que** le corps de rotation (40 ; 50) peut être entraîné par un dispositif d'entraînement électrique (31) disposé à l'extérieur du boîtier (1).

17. Filtre à couches selon l'une des revendications 1 à 16, **caractérisé en ce que** les pistes de glissement (41 ; 53, 54) montent continuellement depuis le début (44 ; 63) de la piste de glissement jusqu'à la fin (43 ; 61, 64) de la piste de glissement.

18. Filtre à couches selon l'une des revendications 1 à 17, **caractérisé en ce que** le dispositif comporte une course libre pour le corps de rotation telle qu'une course libre à douille ou une course libre à cliquet.

19. Filtre à couches selon l'une des revendications 1 à 18, **caractérisé en ce que** le dispositif pour libérer la matière grasse de plusieurs corps de rotation (140, 150 ; 240, 250) comprend ceux qui de préférence peuvent être entraînés par un entraînement unique et commun.

20. Filtre à couches selon l'une des revendications 1 à 19, **caractérisé par** une construction modulaire, dans laquelle dans un boîtier de filtre (202, 203) sont disposés concentriquement autour d'un axe de champs (M) plusieurs bougies de filtre définissant un champ de bougies de filtre (M), chaque champ de bougies de filtre (F) étant associé à un corps de rotation (240) et monté au couvercle du boîtier autour de l'axe de champ (M) au moyen d'embouts d'arbre (281), les arbres (281) du corps de rotation, étant de préférence accouplés par des moyens de traction (280A, 280B) tels que des courroies crantées ou des courroies formant coin ou des pignons en particulier à un arbre d'entraînement central et tournant lors du fonctionnement à des vitesses identiques.

21. Filtre à couches selon l'une des revendications 1 à 19, **caractérisé en ce que** les bougies de filtre sont disposées concentriquement autour d'un axe central et le dispositif comprend deux corps de rotation (140 ; 150) entraînés par un organe d'entraînement, de préférence un moyen d'entraînement à traction (180) avec des vitesses différentes, le rapport des vitesses de l'entraînement étant de préférence choisi de façon que les corps de rotation (140 ; 150) présentent la même vitesse périphérique.

22. Filtre à couches selon la revendication 21, **caractérisé en ce que** l'un des corps de rotation (140) est relié fixement en rotation à l'arbre d'entraînement (132) et l'autre corps de rotation (150) est monté de façon rotative à l'arbre d'entraînement (132).

23. Filtre à couches selon l'une des revendications 1 à 22, **caractérisé en ce que** les pièces d'extrémités de tête sont échangeables et en particulier réalisées en tant que tiges de vis à tête arrondie et éventuellement durcie et/ou que les pistes de glissement sont réalisées sous forme de segments d'anneau (357, 359) échangeables et amovibles par rapport au corps de rotation.

24. Filtre à couches selon la revendication 23, **caractérisé en ce que** le corps de rotation (350) présente au moins deux ailes inclinées l'une par rapport à l'autre et vers la plaque de séparation, des plaques de renfort (353 A, 353 B) ou analogues et/ou deux rampes (363 A, 363 B) inclinées à l'opposé l'une de l'autre pour renforcer les éléments échangeables (357, 359).
